# EUROPÄISCHE PATENTSCHRIFT

(11) **EP 2 223 154 B1**
(45) Veröffentlichungstag und Bekanntmachung des Hinweises auf die Patenterteilung: **20.11.2013**
(21) Anmeldenummer: 08864782.1
(22) Anmeldetag: 09.12.2008
(51) Int. Cl.: G01S 13/93

(54) **RADARSENSORANORDNUNG**
RADAR SENSOR ARRANGEMENT
ENSEMBLE DE DÉTECTION RADAR

(30) Priorität: 21.12.2007 DE 102007062159
(43) Veröffentlichungstag der Anmeldung: 01.09.2010
(73) Patentinhaber: Hella KGaA Hueck & Co., 59552 Lippstadt (DE)
(72) Erfinder: WIXFORTH, Thomas, 33330 Gütersloh (DE)
(86) Internationale Anmeldenummer: PCT/EP2008/067067
(87) Internationale Veröffentlichungsnummer: WO 2009/080491

(56) Entgegenhaltungen:
- EP-A- 0 611 969
- EP-A- 0 707 220
- EP-A- 0 717 290
- EP-A- 0 740 166
- WO-A-2007/014333
- DE-A1- 19 842 250
- US-A1- 2006 119 473
- KLOTZ M ET AL: "A 24 GHz short range radar network for automotive applications" RADAR, 2001 CIE INTERNATIONAL CONFERENCE ON, PROCEEDINGS OCT 15-18, 2001, PISCATAWAY, NJ, USA,IEEE, 15. Oktober 2001 (2001-10-15), Seiten 115-119, XP010577783 ISBN: 978-0-7803-7000-5
- GROLL H P ET AL: "Multi-sensor-systems at mm-wave range for automotive applications" RADAR, 2001 CIE INTERNATIONAL CONFERENCE ON, PROCEEDINGS OCT 15-18, 2001, PISCATAWAY, NJ, USA,IEEE, 15. Oktober 2001 (2001-10-15), Seiten 150-153, XP010577791 ISBN: 978-0-7803-7000-5

## Beschreibung

Die Erfindung betrifft eine Anordnung mit den Merkmalen des Oberbegriffs des Anspruchs 1 zur Erfassung des Umfelds eines Kraftfahrzeuges mit elektromagnetischen Signalen, insbesondere mit Radarwellen, die mit Sendevorrichtungen gesendet, an Objekten der Umgebung reflektiert und anschließend empfangen werden.

Die Fahrer von Kraftfahrzeugen sollen zum Teil aus Gründen des Komforts und zum Teil aus Gründen der größeren Sicherheit mehr und mehr entlastet werden. Eine Entlastung wird insbesondere auch durch eine adaptive Geschwindigkeitsregelung (ACC) erreicht. Damit eine adaptive Geschwindigkeitsregelung möglich ist, ist eine Messung des Abstands des Fahrzeugs zum vorausfahrenden Fahrzeug notwendig. Von den verschiedenen Methoden der Abstandmessung hat sich das Radar als Abstandsmessmethode als besonders gut geeignet erwiesen. Radarsensorsysteme (nachstehend auch als Radarsensoranordnungen bezeichnet) haben daher in der Vergangenheit bereits Eingang in Praxis der adaptiven Geschwindigkeitsregelung gefunden. Auch zum einfacheren und sichereren Einparken können Radarssensorsystem zweckdienlich sein. Mit Ihnen lässt sich bei Einparkvorgang der Abstand zu Fahrzeugen oder Hindernissen erfassen, wodurch ein Kollisionswarnung möglich ist.

Eine Überblick über die in der Vergangenheit entwickelten Systeme gibt der Artikel "Automotive Radar - Status and Trends" von Martin Schneider, der aus Anlass der "German Microwave Conference GeMiC", Ulm, April 2005 veröffentlicht wurde.

Eines der in dem genannten Artikel erwähnten Radarsysteme ist beispielsweise in dem Buch "Sicherheits- und Komfortsysteme", Friedr. Vieweg & Sohn Verlag/GVW Fachverlage GmbH, 3. Auflage, 2004, beschrieben. Das dort beschriebene Radarsystem verwendet Radarwellen mit einer Trägerfrequenz von 76 bis 77 GHz mit einer Bandbreite von ca. 200 MHz. Mit dem beschriebenen Radarsystem lässt sich eine Entfemungstrennfähigkeit von 0,75 m und eine Geschwindigkeitstrennfähigkeit von 1 m/s erreichen. Das System ist dazu vorgesehen den Abstand zu und die Geschwindigkeit von vorausfahrenden Fahrzeuge zu erfassen. Es ist daher ausgelegt Objekte in einem Winkelbereich von 8° zu detektieren. Das System ist allerdings nicht dazu vorgesehen und geeignet Objekte in einem größeren Winkelbereich zu erfassen, insbesondere wenn sich diese in unmittelbarer Nähe zum Kraftfahrzeug angeordnet sind, wie es z. B. im Stadtverkehr oder beim Einparken der Fall ist. Das System kann lediglich als so genanntes "Long-Range-Radar" verwendet werden nicht jedoch als so genanntes "Short Range Radar".

In dem genannten Artikel sind ferner "Short-Range-Radar"-Systeme für die 24 GHz ultra wideband-Technologie erwähnt, bei denen eine Vielzahl von selbstständig arbeitenden Einheiten Radarwellen erzeugen und senden, die reflektierten Radarwellen empfangen und auswerten und die Auswertung an einem Ausgang der Einheit zur Verfügung stellen. Die Auswertung liefert eine Liste von Objekten von einem Teilbereich der Umgebung des Kraftfahrzeugs, in welcher die detektierten Objekte mit ihrer Entfernung, ihren Winkel bezüglich einer Referenz und ihrer Relativgeschwindigkeit (Radialgeschwindigkeit) erfasst sind. Ein Kraftfahrzeug kann eine Vielzahl dieser Einheiten aufweisen, die zusammen eine Gesamtliste der Objekte in der Umgebung des Kraftfahrzeugs liefern können. Die verwendeten Einheiten des verwendeten Radarsensorsystems sind als "Ultra-Wide-Band-Sensoren" bekannt.

Der Ansatz, der hinter diesen Systemen steht, ist es möglichst kleine und kompakte Umfeldsensoren zu erhalten, die jeder für sich den Teilbereich des Umfelds des Kraftfahrzeugs überwacht und vollständig aufbereitete Informationen über diesen Teilbereich liefert. Dazu werden die empfangenen Wellen aufbereitet, digitalisiert und ausgewertet. Das Ergebnis der Auswertung wird in digitaler Form an eine Zentraleinheit übermittelt. Erst in einer Zentraleinheit, die über einen Bus oder dergleichen mit den einzelnen Einheiten verbunden ist, wird dann ein vollständiges Bild von der Umgebung aus den von den Einheiten gelieferten Teilbildern zusammengesetzt.

Der bisher verfolgte Ansatz hat sich durchaus als praktikabel allerdings auch als sehr aufwändig erwiesen. Zum einen muss jede Einheit für die Auswertung der empfangenen Radarwellen mit der notwendigen "Intelligenz" ausgestattet werden, um die Informationen von dem überwachten Teilbereich des Umfelds zu erzeugen. Dieses macht Mikroprozessoren oder andere Mittel zur digitalen Signalverarbeitung/-auswertung in jeder der Einheiten notwendig.

Eine Eigenschaft der Radarumfeldsensorsysteme mit Ultra-Wide-Band-Sensoren ist, dass diese elektromagnetische Welle mit einem erheblichen Bandbreite abstrahlen. Dieses ist die Folge der kurzen Impulse, die ausgesendete und empfangen werden. Dieses ermöglicht einerseits eine gute Entfemungstrennfähigkeit der Radarumfeldsensorsysteme, andererseits wird insbesondere die große Bandbreite und die dadurch u. U. entstehenden Interferenzen zu bestehenden System als problematisch angesehen. Die Zulassungen der Ultra-Wide-Band-Sensoren durch die zuständigen Behörden werden daher nur sehr zögerlich und auch zum Teil nur zeitlich befristet vergeben, wie in dem eingangs genannten Artikel dargestellt ist.

Aus dem Dokument DE 693 25 504 T2 ist ein Radarsystem für Kraftfahrzeuge bekannt, dass zur Kollisionsverhütung beim Ein- und Ausparken verwendet werden kann. Das Radarsystem verwendet frequenzmodulierte Signale die ausgesendet und an einem Objekt im Umfeld reflektiert werden. Das offenbarte Radarsystem weist mehrere Antennen auf, die zugleich Sende- und Empfangsantennen sind. Jede Antenne ist angeordnet, um einen Strahl mit im Wesentlichen dem gleichen Muster oder der gleichen Richtungswirkung wie die durch die anderen Antennen abgestrahlten Strahlen abzustrahlen. Der Strahl jeder Antenne wird in einer geringfügig verschiedenen Richtung von den durch die anderen Antennen abgestrahlten Strahlen abgestrahlt. Die Antennen müssen zu diesem Zweck nah beieinander angeordnet sein. In dem Dokument wird vorgeschlagen, entweder eine Offset-Defokus-Parabolantenne oder einen gemeinsamen parabolischen Reflektor und vier Abstrahleinrichtungen in der Nachbarschaft des Fokus des Reflektors zu verwenden, die geringfügig verschiedene Orientierungen zum Reflektor haben. Das Dokument offenbart also eine Lehre, die Antennen in einer Baugruppe anzuordnen. Insgesamt ist eine kompakte Bauform des aus dem Dokument bekannten Radarsystems vorgegeben. Auch das Schaltbild führt zu einem Radarsystem, dass in einer Baugruppe realisiert ist.

Wird ein aus dem Dokument DE 693 25 504 T2 bekanntes Radarsystem verwendet, ist eine Überwachung des näheren Umfeldes zum Beispiel vor oder hinter dem mit dem Radarsystem ausgestattetem Kraftfahrzeug wegen der Form der Antennenbaugruppe eigentlich nur mit mehreren Radarsystemen möglich. Der Aufwand zur Erfassung des gesamten näheren Umfeldes des Kraftfahrzeugs vervielfacht sich dadurch. Eine Trennung der Antennen in separate Baugruppen aus je einer Sendeantenne und einer Empfangsantenne, wie sie beispielsweise aus dem Dokument DE 695 23 870 T2 bekannt ist, ist in dem Dokument DE 693 25 504 T2 nicht beschrieben.

Aus dem Dokument DE 695 23 870 T2 ist zwar die Trennung der Antennen in separate Baugruppen aus je einer Sendeantenne und einer Empfangsantenne bekannt. Das in dem Dokument offenbarte Radarsystem nutzt aber keine frequenzmodulierten Signale.

Der vorliegenden Erfindung liegt die Aufgabe zugrunde, eine Anordnung zur Erfassung des Umfelds eines Kraftfahrzeuges vorzuschlagen, welche zum Erfassen von Objekten in der unmittelbaren Umgebung des Kraftfahrzeugs geeignet ist, eine möglichst geringe Bandbreite benötigt und gleichzeitig einfach und kostengünstig aufgebaut ist. Das Radarsystem soll möglichst sowohl für den Fernbereichs- als auch für Nah- und Mittelbereichsanwendungen eingesetzt werden.

Diese Aufgabe wird erfindungsgemäß durch eine Anordnung mit den Merkmalen des Anspruchs 1 gelöst. Die Anordnung zur Erfassung des Umfeldes eines Kraftfahrzeugs weist mindestens zwei, mit Abstand zueinander angeordnete Sendevorrichtungen zum Senden von elektromagnetischen Signalen, insbesondere Radarwellen auf. Die Anordnung weist ferner mindestens eine Empfangsvorrichtung zum Empfangen der an zumindest einem ersten Objekt reflektierten Signal auf. Außerdem weist die Anordnung eine Signalerzeugungs- und Signalauswertevorrichtung zum Erzeugen der zu sendenden Signale mit einer ersten Frequenz und zum Auswerten der zu empfangenden Signale auf. Die Sendevorrichtung, die Empfangsvorrichtung und die Signalerzeugungs- und Signalauswertevorrichtung sind über mindestens eine elektrische Leitung, zum Beispiel einer Koaxialleitung miteinander verbunden.

Bei der erfindungsgemäßen Anordnung, gibt es eine zentrale Signalerzeugungs- und Signalauswertevorrichtung. In dieser zentralen Signalerzeugungs- und Signalauswertevorrichtung werden zum einen die zu sendenden Signale erzeugt und zum anderen die reflektierten, empfangenen Signale ausgewertet. Die Sendevorrichtungen und die Empfangsvorrichtung dienen lediglich zur Aufbereitung des zu sendenden Signals bzw. des empfangenen Signals und zur Weiterleitung der analogen Signale von der zentralen Signalerzeugungs- und Verarbeitungsvorrichtung zum ersten Objekt, an welchem die Signale reflektiert werden, bzw. vom ersten Objekt zur zentralen Signalerzeugungs- und Signalauswertevorrichtung. In der Empfangsvorrichtung erfolgt keine weitere Verarbeitung oder Auswertung des Signals dahingehend, dass ein Bild von der Umgebung oder eines Teilbereichs der Umgebung erstellt wird. Das Erzeugen eines Bilds von der Umgebung des Kraftfahrzeugs bleibt der zentralen Signalerzeugungs- und Signalauswertevorrichtung überlassen. Allerdings kann die zentrale Signalerzeugungs- und Signalauswertevorrichtung zusammen mit einer Empfangsvorrichtung in einem Gehäuse angeordnet sein.

Gemäß der Erfindung weist jede Sendevorrichtung einen Frequenzvervielfacher zum Erzeugen des zu sendenden Signals aus dem ersten Signal auf, mit welchem die Frequenz des ersten Signals vervielfacht wird. Mit dem Freqenzvervielfacher erhält das von der Signalerzeugungs- und Signalverarbeitungsvorrichtung erzeugte Signal die zum Aussenden notwendige Frequenz. Der Frequenzvervielfacher ist über den Steueranschluss ein- und ausschaltbar. Im eingeschalteten Fall erzeugt der Frequenzvervielfacher ein zu sendendes Signal mit höherer Frequenz als der ersten Frequenz und im ausgeschalteten Fall erzeugt der Frequenzvervielfacher kein Signal. Über das Ein- und Ausschalten des Frequenzvervielfachers können Wellenpakete des zu sendenden Signals erzeugt werden.

Die Sendevorrichtungen können ein Filter, insbesondere einen Bandpassfilter aufweisen. Vorteilhaft ist, dass ein solches Filter dem Frequenzvervielfacher nachgeschaltet ist.

Gemäß der Erfindung können die Sendevorrichtungen ferner Sendeantennen zum Abstrahlen des zu sendenden Signals aufweisen.

Die Frequenz des zu sendenden und des zu empfangenen Signals kann an die Anforderungen, die sowohl technischer als auch rechtlicher Natur sein können, frei angepasst werden. So kann die Frequenz des zu sendenden und des zu empfangenen Signals zum Beispiel 5,8 GHz betragen, so dass die Sendeeinrichtungen vorteilhaft zum Senden von Signalen mit dieser Frequenz und die Empfangsvorrichtungen zum Empfang von Signalen mit dieser Frequenz eingerichtet und geeignet sind. Die Verwendung von Siganlen mit einer Trägerfrequenz von 5,8 GHz macht den Einsatz von preiswerteren Komponenten möglich und erleichtert auch Zulassungsverfahren in verschiedenen Ländern, da die Signale eine schmalbandig sind und vorzugsweise eine absolute Bandbreite von nur 100 MHz bis 150 MHz bzw. eine relative Bandbreite von ca. 2,5 % haben gegenüber einer Bandbreite von mehr als 500 MHz bzw. 20 bis 25 % bei Ultra-Wide-Band-Sensoren.

Die Empfangsvorrichtungen weisen vorteilhaft Empfangsantennen zum Empfangen des an einem Objekt der Umgebung reflektierten Signals auf. Ferner kann die Empfangsvorrichtung einen Verstärker zum Verstärken des empfangenen Signals umfassen.

Die Empfangsvorrichtung kann gemäß der Erfindung ferner einen Mischer, z. B. einen subharmonischen Mischer zum Mischen des empfangenen Signals mit einem lokalen Oszillatorsignal aufweisen. Durch das Mischen, es handelt sich vorteilhaft um ein Herabmischen, kann das Signal auf eine Frequenz gebracht werden, die deutlich geringer ist, als die Frequenz des empfangenen Signals, die jedoch für eine Übertragung des Signals vorteilhaft ist.

In einer Empfangsvorrichtung einer erfindungsgemäßen Vorrichtung kann ein Verstärker zum Verstärken des empfangenen, gemischten Signals vorgesehen sein. Die Verstärkung der Verstärker kann einstellbar sein, vorzugsweise durch Einstellsignale, die von der zentrale Signalerzeugungs- und Signalauswertevorrichtung an den Verstärker übermittelt werden. Ebenso kann ein Filter in der Empfangsvorrichtung vorgesehen sein, mit dem das empfangene und/oder gemischte Signal gefiltert wird.

Gemäß der Erfindung kann die Empfangsvorrichtung einen Frequenzvervielfacher zum Erzeugen des lokalen Oszillatorsignals aus einem zweiten Signal aufweisen. Das zweite Signal wird vorteilhaft von der Signalerzeugungs- und Signalauswertevorrichtung erzeugt. Sofern als Mischer in der Empfangvorrichtung ein subharmonischer Mischer verwendet wird, kann der Frequenzvervielfacher entfallen.

Gemäß der Erfindung kann die Signalerzeugungs- und Signalauswertevorrichtung einer erfindungsgemäßen Anordnung mindestens einen ersten Schwingungsgenerator zumindest zum Erzeugen des ersten Signals oder zur unmittelbaren Erzeugung des zu sendenden Signals aufweisen. Der erste Schwingungsgenerator kann auch zum Erzeugen des zweiten Signals geeignet und eingerichtet sein. Möglich ist es dabei insbesondere, dass das erste und das zweite Signal identisch sind. Die Frequenz des ersten und/oder zweiten Signals kann bei 1933 MHz Hz liegen.

Ebenso ist es jedoch möglich, dass die Signalerzeugungs- und Signalauswertevorrichtung einer erfindungsgemäßen Anordnung mindestens einen zweiten Schwingungsgenerator zum Erzeugen des zweiten Signals aufweist.

Der oder ggf. die Schwingungsgeneratoren können phasengekoppelte Regelkreise (PLL) mit einem spannungsgesteuerten Oszillator (VCO) umfassen und zum Beispiel digitally controlled oscillators (DCO) bilden. In den phasengekoppelte Regelkreisen kann die Phase des spannungsgesteuerten Oszillators mit der Phase einer Referenzschwingung verglichen werden. Die Referenzschwingung kann mittels direkter digitaler Synthese (DDS) oder einem quarzbasierten Taktgenerator erzeugt werden. Ferner kann der Taktgeber vorgesehen sein, um den Analog-Digital-Umsetzer, das Verarbeitungsmittel und/oder ein Steuerungsmittel zu takten.

Der oder ggf. die Schwingungsgeneratoren und die Signalerzeugungs- und Signalauswertevorrichtungen sind vorteilhaft zur Frequenzmodulation der Signale eingerichtet. Vorzugsweise können dazu die phasengekoppelten Regelkreise verstellt werden.

Die Frequenzmodulation erfolgt vorzugsweise für ein Zeitintervall, in dem eine einzige Sendeantenne zum Senden angesteuert wird, die dann ein frequenzmoduliertes Paket von Wellen (Wellenpaket) sendet.

Das Radarsystem kann als Dauerstrichradar (CW-Radar), insbesondere als frequenzmoduliertes Dauerstrichradar (FMCW-Radar) ausgeführt sein.

Die Signalerzeugungs- und Signalauswertevorrichtung einer erfindungsgemäßen Anordnung kann ferner einen Analog-Digital-Umsetzer zum Digitalisieren des empfangenen und ggf. gemischten Signals aufweisen. In einer Signalerzeugungs- und Signalauswertevorrichtung kann ein Verarbeitungsmittel, vorzugsweise eine digitale Signalverarbeitungseinheit (DSP) z. B. einen Mikroprozessor, ein FPGA oder ein ASIC, zum Verarbeiten des empfangenen und gegebenenfalls gemischten und/oder digitalisierten Signals vorgesehen sein. Über eine Schnittstelle der Signalerzeugungs- und Auswertevorrichtung können dann Informationen über das erfasste Umfeld das Fahrzeugs, zum Beispiel ein Bild, abgerufen werden, die von dem Verarbeitungsmittel bereitgestellt werden.

Die elektrischen Leitungen, die zur Übertragung des ersten Signals, des zu sendenden Signals, des ggf. gemischten, verstärkten, gefilterten und/oder digitalisierten empfangenen Signals und/oder des zweiten Signals von der Signalerzeugungs- und Signalauswertevorrichtung zu den Sendevorrichtungen bzw. von der Empfangsvorrichtung zur Signalerzeugungs- und Signalauswertevorrichtung vorgesehen sind, können ein Koaxialkabel oder eine verdrillte Zweidrahtleitung (twistet pair) sein.

In der zentralen Signalerzeugungs- und Signalauswertevorrichtung einer erfindungsgemäßen Anordnung kann ein Steuerungsmittel zum Steuern der Sendevorrichtungen vorgesehen sein. Diese Steuerungsmittel können insbesondere geeignet und eingerichtet sein, die Sendevorrichtungen so anzusteuern, dass die Sendevorrichtungen nacheinander Wellenpakete des zu sendenden Signals aussenden.

Die zentralen Signalerzeugungs- und Signalauswertevorrichtung kann zu einer digitalen Strahlformung (digital beam forming, DBF) geeignet und eingerichtet sein. Dazu aber auch aus anderen Gründen kann es möglich sein, dass die Übertragungsfunktion oder Impulsantwort der Anordnung ermittelt wird. Die ermittelte Übertragungsfunktion und/oder Impulsantwort kann beispielsweise mittels Methoden zur Lösung inverser Probleme zur Berechnung von Positionen, Umrissen, Geschwindigkeiten und/oder zwei- oder dreidimensionale bildhafte Repräsentationen von Objekten im sensierten Umfeld dienen. Die erfindungsgemäße Radaranordnung kann dadurch geeignet und eingerichtet sein, trotz der vergleichsweise geringen Bandbreite der gesendeten bzw. empfangenen Signale eine gute Entfernungs- und Ortstrennfähigkeit im Nahbereich und eine gute Winkeltrennfähigkeit im Fernbereich zu erreichen.

Der Messablauf, insbesondere bezüglich der Wellenpakete, zum Beispiel der Steilheiten der Frequenzmodulation und der Abtastraten der Analog-Digital-Umsetzer kann von externen Parametern wie zum Beispiel der Eigengeschwindigkeit abhängig eingestellt werden.
Anhand der beigefügten Zeichnungen wird die Erfindung nachfolgend näher erläutert. Dabei zeigt:

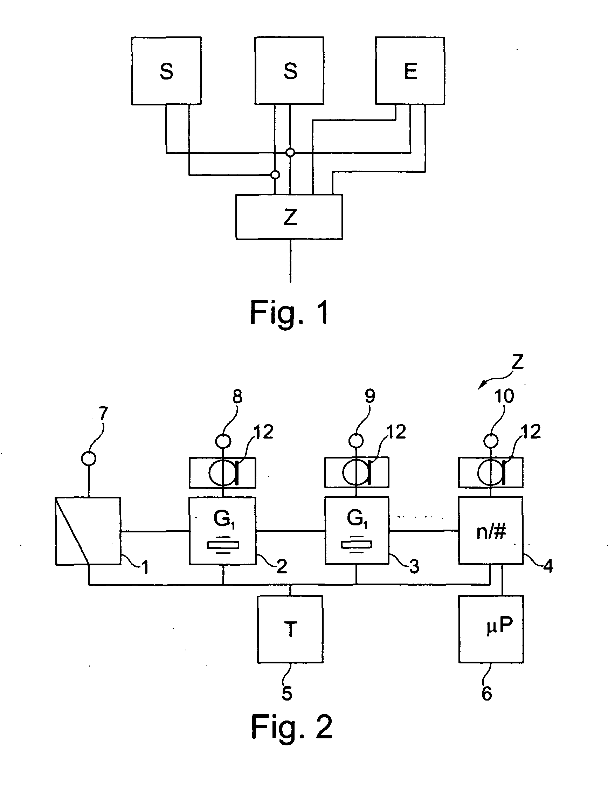

- Fig. 1: ein allgemeines Blockschaltbild einer erfindungsgemäßen Anordnung zur Erfassung des Umfelds eines Kraftfahrzeugs,
- Fig. 2: ein Blockschaltbild einer zentralen Signalerzeugungs- und Signalauswertevorrichtung,

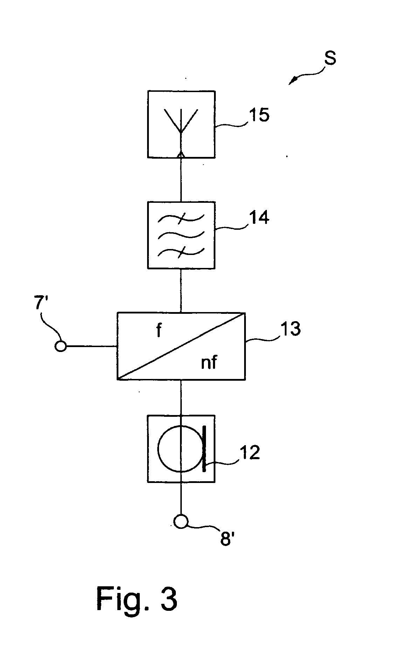

- Fig. 3: ein Blockschaltbild einer Sendevorrichtung,
- Fig. 4: ein Blockschaltbild einer Empfangsvorrichtung und
- Fig. 5: eine schematische Darstellung einer erfindungsgemäßen Anordnung.

Die erfindungsgemäße Anordnung zur Erfassung des Umfelds eines Kraftfahrzeugs weist zwei mit Abstand zueinander beispielsweise in einem Stoßfänger angeordnete Sendevorrichtungen S zum Senden von Radarwellen auf. Ferner ist eine Empfangsvorrichtung E vorgesehen, welche die von Objekten in der Umgebung des Kraftfahrzeugs reflektierten Radarwellen empfängt. Sowohl die Sendevorrichtungen S als auch die Empfangsvorrichtungen E sind mit einer zentralen Signalerzeugungs- und Signalauswertevorrichtung Z über Leitungen verbunden.

Die zentrale Signalerzeugungs- und Signalauswertevorrichtung Z weist einen ersten Schwingungsgenerator 2 auf, mit dem ein erstes sinusförmiges Signal erzeugt werden kann. Dieses erste sinusförmige Signal kann über eine Koaxialleitung 12 zu einem Anschluss 8 geführt werden. Dieser Anschluss 8 ist über eine Koaxialleitung mit einem Anschluss 8' der Sendevorrichtung verbunden.

Die Signalerzeugungs- und Signalauswertevorrichtung Z kann zum Erzeugen eines zweiten Signals einen zweiten Schwingungsgenerator 3 zum Erzeugen von sinusförmigen elektromagnetischen Schwingungen aufweisen. Dieses zweite Signal wird über eine Koaxialleitung 12 zu einem Anschluss 9 geführt. Der Anschluss 9 ist mit einem Anschluss 9' der Empfangsvorrichtung E verbunden.

Ferner weist die zentrale Signalerzeugungs- und Signalauswertevorrichtung Z einen Analog-Digital-Umsetzer 4 auf, der über eine Koaxialleitung 12 und einen Anschluss 10 von einem Anschluss 10' der Empfangsvorrichtung E ein analoges Signal empfängt, das noch näher beschrieben wird. Ein Digitalausgang des Analog-Digital-Umsetzers 4 ist mit einem Mikroprozessor 6 der Signalerzeugungs- und Signalauswertevorrichtung Z verbunden. In dem Mikroprozessor 6 wird das digitalisierte Signal, das am Anschluss 10 der Signalerzeugungs- und Signalauswertevorrichtung Z anliegt, verarbeitet und ausgewertet. Ergebnisse der Auswertung können an einer Schnittstelle der Signalerzeugungs- und Signalauswertevorrichtung Z abgegriffen werden, der mit dem Mikroprozessor 6 verbunden ist.

In der zentralen Signalerzeugungs- und Signalauswertevorrichtung ist ferner ein Steuerungsmittel 1 zum Steuern der Sendevorrichtungen S vorgesehen. Ein Ausgang des Steuerungsmittels ist mit einem Anschluss 7 der Signalerzeugungs- und Signalauswertevorrichtung Z verbunden, der seinerseits mit Anschlüssen 7' der Sendevorrichtungen verbunden ist.

Der Sendervorrichtung S wird über den Anschluss 8' das erste sinusförmige elektromagnetische Signal zugeführt. Über eine Koaxialleitung 12 gelangt das erste Signal zu einem Frequenzvervielfacher 13, in dem der erste Frequenz des ersten Signals vervielfacht wird. Der Frequenzvervielfacher 13 kann über den Steueranschluss 7' einund ausgeschaltet werden. Im eingeschalteten Fall erzeugt der Frequenzvervielfacher 13 ein zu sendendes Signal mit höherer Frequenz als der ersten Frequenz und im ausgeschalteten Fall, erzeugt der Frequenzvervielfacher 13 kein Signal. Über das Einund Ausschalten des Frequenzvervielfachers 13 können Wellenpakete des zu sendenden Signals erzeugt werden.

Der Ausgang des Frequenzvervielfachers 13 ist mit einem Bandpassfilter 14 verbunden, welches das zu sendende Signal filtert. Dem Bandpassfilter 14 ist eine Sendeantenne 15 nachgeschaltet, mit welcher die Wellenpakete des zu sendendes Signals in die Umgebung des Kraftfahrzeugs gesendet werden.

Der Steueranschluss 7' von verschiedenen Sendevorrichtungen wird nacheinander angesteuert, so dass die zu sendenden Pakete immer nur von einer Sendevorrichtung ausgesendet werden.

Das von den Sendevorrichtungen S ausgesendete Signal wird über eine Empfangsantenne 16 der Empfangsvorrichtung E empfangen. Das empfangene Signal, das an Objekten in der Umgebung des Kraftfahrzeugs reflektiert worden ist, wird einem der Empfangsantenne 16 nachgeschalteten Empfangsverstärker 17 zugeführt. In dem Empfangsverstärker 17 wird das empfangene Signal verstärkt. Anschließend wird das empfangene und verstärkte Signal in einen Mischer 18 mit einem lokalen Oszillatorsignal gemischt.

Das zweite, in der Signalerzeugungs- und Signalverarbeitungsvorrichtung Z erzeugte Signal wird der Empfangsvorrichtung über einen Anschluss 9' zugeführt, der über den Anschluss 9 und Koaxialleitungen 12 mit dem zweiten Schwingungsgenerator 3 verbunden ist. Das der Empfangsvorrichtung E über den Anschluss 9' zugeführte zweite Signal wird in seiner Frequenz durch einen Frequenzvervielfacher 19 vervielfacht. Dieses in seiner Frequenz vervielfachte Signal wird dem Mischer 18 als lokales Oszillatorsignal zugeführt.

Das empfangene, vom Verstärker 17 verstärkte und mit dem lokalen Oszillatorsignal gemischte Signal wird mittels eines Verstärkers 20 erneut verstärkt. Anschließend wird es durch ein Bandpassfilter 21 gefiltert und über Koaxialleitungen und Anschlüssen 10', 10 der Signalerzeugungs- und Signalverarbeitungsvorrichtung Z zugeführt. In der Signalerzeugungs- und Signalverarbeitungsvorrichtung Z wird das empfangene, gemischte und gefilterte Signal als analoges Signal dem Digital-Umsetzer 4 zugeführt.

Die erfindungsgemäße Anordnung arbeitet wie folgt:

In dem ersten Signalgenerator 2 der zentralen Signalerzeugungs- und Signalauswertevorrichtung Z wird das Signal erzeugt, das in modifizierter Form über die Sendeantenne 15 der Sendevorrichtung 15 in die Umgebung des Kraftfahrzeugs gesendet wird. Das vom ersten Signalgenerator 2 erzeugte Signal hat eine erste im Verhältnis zu dem tatsächlich ausgesendeten Signal niedrige Frequenz. Diese niederfrequente Signal ist geeignet und angepasst, um über Koaxialleitungen 12 zu den Sendevorrichtungen S übertragen zu werden. Erst durch den Frequenzvervielfacher 13 in den Sendevorrichtungen S erhält das Signal die Frequenz, die für Radarwellen vorgesehen sind, z. B. 5, 8 GHz. Über den Eingang 7' der Sendevorrichtung S wird zugleich durch den Frequenzvervielfacher 13 ein Wellenpaket des zu sendenden Signals erzeugt.

Das von der Sendevorrichtung S über die Sendeantenne 15 ausgestrahlte Wellenpaket von Radarwellen wird an Objekten in der Umgebung des Kraftfahrzeugs reflektiert. Die reflektierten Wellen werden von der Empfangsantenne 16 der Empfangsvorrichtung E aufgenommen. Die zum Teil schwachen Signale werden durch den Empfangsverstärker 17 verstärkt. Um in eine Form gebracht zu werden, die für die Übertragung über Koaxialleitungen geeignet ist, wird das hochfrequente empfangene Signal mit dem Mischer 18 herabgemischt. Dadurch wird ein niederfrequentes Signal erhalten, welches besser für die Übertragung über die Koaxialleitungen 12 von der Empfangsvorrichtung E zur zentralen Signalerzeugungs- und Signalverarbeitungsvorrichtung Z geeignet ist.

In der zentralen Signalerzeugungs- und Signalverarbeitungsvorrichtung Z wird das analoge Signal digitalisiert und anschließend im Mikroprozessor 6 ausgewertet. Das Ergebnis der Auswertung kann an der Schnittstelle der zentralen Signalerzeugungs- und Signalverarbeitungsvorrichtung Z abgegriffen werden.

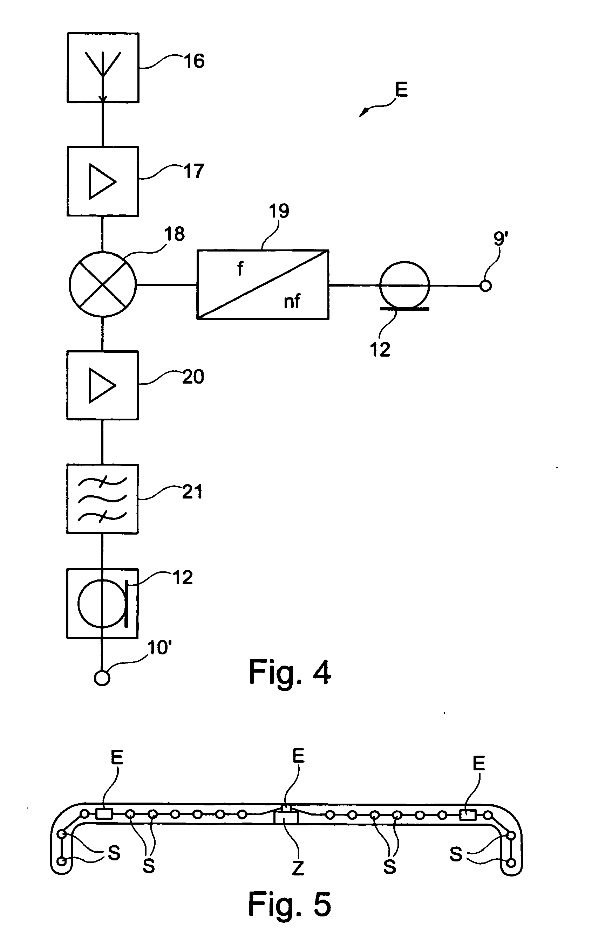

Figur 4 zeigt schematisch wie die verschiedenen Vorrichtungen einer erfindungsgemäßen Anordnung räumlich in einem Stoßfänger F eines Kraftfahrzeugs angeordnet sein können. Die zentralen Signalerzeugungs- und Signalverarbeitungsvorrichtung Z, die Sendevorrichtungen S und die Empfangsvorrichtungen E können von außen unsichtbar in dem Stoßfänger angebracht sein. Eine Anzahl von zwölf Sendevorrichtungen S und eine Anzahl von drei Empfangsvorrichtungen ist über die gesamte Länge des Stoßfängers verteilt angeordnet. In der Mitte zwischen Enden des Stoßfängers F ist die zentrale Signalerzeugungs- und Signalverarbeitungsvorrichtung Z angebracht. Die zentrale Signalerzeugungs- und Signalverarbeitungsvorrichtung Z ist über ein Koaxialkabel mit den Sendevorrichtungen S und den Empfangsvorrichtungen E verbunden.

### Bezugszeichenliste

- Z: Signalerzeugungs- und Signalverarbeitungsvorrichtung
- S: Sendevorrichtung
- E: Empfangsvorrichtung

- 1: Steuermittel
- 2: erster Signalgenerator
- 3: zweiter Signalgenerator
- 4: Analog-Digital-Umsetzer
- 5: Taktgenerator
- 6: Verarbeitungsmittel
- 7, 7': Steuerausgang, -eingang
- 8, 8': Signalausgang, -eingang
- 9, 9': Signalausgang, -eingang
- 10, 10': Signaleingang, -ausgang

- 12: Koaxialkabel
- 13: Frequenzvervielfacher
- 14: Filter
- 15: Sendeantenne
- 16: Empfangsantenne
- 17: Empfangsverstärker
- 18: Mischer
- 19: Frequenzvervielfacher
- 20: Verstärker
- 21: Filter

## Patentansprüche

1. Anordnung zur Erfassung des näheren und/oder ferneren Umfelds eines Kraftfahrzeuges
- mit mindestens zwei, mit Abstand zueinander angeordneten Sendevorrichtungen (S) zum Senden von elektromagnetischen Signalen, insbesondere Radarwellen,
- mit mindestens einer Empfangsvorrichtung (E) zum Empfangen der an zumindest einem ersten Objekt reflektierten Signale,
- mit einer Signalerzeugungs- und Signalauswertevorrichtung (Z) zur Erzeugung der zu sendenden Signale mit einer ersten Frequenz und zum Auswerten der zu empfangenden Signale, und
- und mit zumindest einer elektrischen Leitung (12), über die die Sendevorrichtungen (S), die Empfangsvorrichtungen (E) und die Signalerzeugungs- und Signalauswertevorrichtung (Z) miteinander verbunden sind und die zum Austauschen der zu sendenden bzw. der zu empfangenden Signale in analoger Form zwischen den Sendevorrichtungen (S), den Empfangsvorrichtungen (E) und der Signalerzeugungs- und Empfangsvorrichtung (Z) geeignet und eingerichtet sind
**dadurch gekennzeichnet, dass**
- die Sendevorrichtungen (S) einen Frequenzvervielfacher (13) zum Erzeugen des zu sendenden Signals aus einem ersten Signal aufweisen, mit welchem die Frequenz des ersten Signals vervielfacht wird, und
- der Frequenzvervielfacher (13) der Sendevorrichtung ein- und ausschaltbar ist, um Wellenpakete des zu sendenden Signals zu erzeugen.

2. Anordnung nach Anspruch 1, **dadurch gekennzeichnet, dass** die Sendevorrichtungen (S) ein Filter (14), insbesondere einen Bandpassfilter (14) aufweisen.

3. Anordnung nach Anspruch 2, **dadurch gekennzeichnet, dass** das Filter (14) dem Frequenzvervielfacher (13) nachgeschaltet ist.

4. Anordnung nach einem der Ansprüche 1 bis 3, **dadurch gekennzeichnet, dass** die Sendevorrichtungen (S) Sendeantennen (15) zum Abstrahlen des zu sendenden Signals aufweisen.

5. Anordnung nach einem der Ansprüche 1 bis 4, **dadurch gekennzeichnet, dass** die Empfangsvorrichtung (E) eine Empfangsantenne (16) zum Empfangen des reflektierten Signals aufweist.

6. Anordnung nach Anspruch 5, **dadurch gekennzeichnet, dass** die Empfangsvorrichtung (E) einen Verstärker (17) zum Verstärken des empfangenen Signals aufweist.

7. Anordnung nach Anspruch 5 oder 6, **dadurch gekennzeichnet, dass** die Empfangsvorrichtung (E) einen Mischer (18) zum Mischen des empfangenen Signals mit einem lokalen Oszillatorsignal aufweist.

8. Anordnung nach Anspruch 7, **dadurch gekennzeichnet, dass** die Empfangsvorrichtung (E) einen Verstärker (20) zum Verstärken des empfangenen, gemischten Signals aufweist.

9. Anordnung nach Anspruch 8, **dadurch gekennzeichnet, dass** die Empfangsvorrichtung (E) ein Filter (21) zum Filtern des empfangenen oder zum Filtern des empfangenen und gemischten Signals aufweist.

10. Anordnung nach einem der Ansprüche 1 bis 9, **dadurch gekennzeichnet, dass** die Signalerzeugungs- und Signalauswertevorrichtung (Z) mindestens einen ersten Schwingungsgenerator (2) zumindest zum Erzeugen des ersten Signals oder des zu sendenden Signals aufweist.

11. Anordnung nach Anspruch 10, **dadurch gekennzeichnet, dass** der erste Schwingungsgenerator (2) auch zum Erzeugen eines zweiten Signals geeignet und eingerichtet ist.

12. Anordnung nach Anspruch 11, **dadurch gekennzeichnet, dass** das zweite Signal und das erste Signal identisch sind.

13. Anordnung nach Anspruch 12, **dadurch gekennzeichnet, dass** die Signalerzeugungs- und Signalauswertevorrichtung (Z) mindestens einen zweiten Schwingungsgenerator (2) zum Erzeugen eines zweiten Signals aufweist.

14. Anordnung nach einem der Ansprüche 11 bis 13, **dadurch gekennzeichnet, dass** die Empfangsvorrichtung (E) einen Frequenzvervielfacher (19) zum Erzeugen eines lokalen Oszillatorsignals aus dem zweiten Signal aufweist.

15. Anordnung nach einem der Ansprüche 1 bis 14, **dadurch gekennzeichnet, dass** die Signalerzeugungs- und Signalauswertevorrichtung (Z) einen Analog-Digital-Umsetzer (4) zum Digitalisieren des empfangenen, ggf. gemischten Signals aufweist.

16. Anordnung nach einem der Ansprüche 1 bis 15, **dadurch gekennzeichnet, dass** die Signalerzeugungs- und Signalauswertevorrichtung (Z) ein Verarbeitungsmittel (6) zum Verarbeiten des empfangenen und ggf. gemischten und/oder digitalisierten Signals aufweist.

17. Anordnung nach Anspruch 16, **dadurch gekennzeichnet, dass** die Signalerzeugungs- und Signalauswertevorrichtung (Z) eine Schnittstelle aufweist, an welcher Informationen über das erfasste Umfeld des Kraftfahrzeugs abrufbar sind.

18. Anordnung nach einem der Ansprüche 1 bis 17, **dadurch gekennzeichnet, dass** die elektrischen Leitungen (12) zur Übertragung des ersten Signals, des zu sendenden Signals, des ggf. gemischten, verstärkten, gefilterten und/oder digitalisierten empfangenen Signals und/oder des zweiten Signals von der Signalerzeugungs- und Signalauswertevorrichtung (Z) zu den Sendevorrichtungen (S) Koaxialkabel oder verdrillte Zweidrahtleitungen sind.

19. Anordnung nach einem der Ansprüche 1 bis 18, **dadurch gekennzeichnet, dass** die Signalerzeugungs- und Signalauswertevorrichtung (Z) ein Steuerungsmittel (1) zum Steuern der Sendevorrichtungen (S) aufweist.

20. Anordnung nach Anspruch 19, **dadurch gekennzeichnet, dass** das Steuerungsmittel (1) geeignet und eingerichtet ist die Sendevorrichtung (S) sequentiell, d. h. nacheinander zum Ausstrahlen des zu sendenden Signals anzusteuern.

21. Anordnung nach einem der Ansprüche 1 bis 20, **dadurch gekennzeichnet, dass** die Signalerzeugungs- und Signalauswertevorrichtung (Z) einen Taktgeber (5) aufweist, der den ersten Schwingungsgenerator (2), den zweiten Schwingungsgenerator (3), den Analog-Digital-Umsetzer (4), das Verarbeitungsmittel (6) und/oder das Steuerungsmittel (1) taktet.

22. Verfahren zum Erfassung des näheren und/oder ferneren Umfelds eines Kraftfahrzeuges mit einer Anordnung nach einem der Ansprüche 1 bis 21.

23. Verfahren nach Anspruch 22, **dadurch gekennzeichnet, dass** mittels der zentralen Signalerzeugungs- und Signalauswertevorrichtung (Z) eine bildhafte zwei- oder dreidimensionale Darstellung von Objekten oder Personen im näheren und/oder ferneren Umfeld des Kraftfahrzeugs erzeugt wird.

24. Verfahren nach einem der Ansprüche 22 bis 23, **dadurch gekennzeichnet, dass** die Signalerzeugungs- und Signalauswertevorrichtung (Z) die Frequenzvervielfacher (13) der Sendevorrichtung (S) so steuert, dass jeweils nur eine Sendevorrichtung zum Senden eines Signals aktiviert ist.

## Claims

1. Arrangement for the detection of the closer and/ or remote environment of a motor vehicle
- comprising at least two emission devices (S) arranged at a distance from each other for the sending of electromagnetic signals, in particular of radar emissions,
- comprising at least one receiver device (E) for the reception of the signals reflected from at least one first object,
- comprising a signal-generating and signal-analyzing device (Z) for the generation of the signals to be sent having a first frequency, and for the analysis of the signals to be received, and
- comprising at least one electric line (12), by means of which the emission devices (S), the receiver devices (E) and the signal-generating and signal-analyzing devices (Z) are connected and which is suitable and equipped for the exchange of the signals to be sent and/or to be received between the emission devices (S), the receiver devices (E) and the signal-generating and signal-analyzing devices (Z) in an analog mode
**Characterized in that**
- the emission devices (S) comprise a frequency multiplier (13) for the generation of the signal to be sent from a first signal, with which the frequency of the first signal is multiplied, and
- the frequency multiplier (13) of the emission device can be switched on and off to generate wave packs of the signal to be sent.

2. Arrangement according to Claim 1, **characterized in that** the emission device (S) comprises a filter (14), particularly a band-pass filter (14).

3. Arrangement according to Claim 2, **characterized in that** the filter (14) is arranged downstream of the frequency multiplier (13).

4. Arrangement according to one of the Claims 1 to 3, **characterized in that** the emission devices (S) comprise emission antennae (15) for the emission of the signal to be sent.

5. Arrangement according to one of the Claims 1 to 4, **characterized in that** the receiver device (E) comprises a receiver antenna (16) for the reception of the reflected signal.

6. Arrangement according to Claim 5, **characterized in that** the receiver device (E) comprises an amplifier(17) for the amplification of the received signal.

7. Arrangement according to Claims 5 or 6, **characterized in that** the receiver device (E) comprises a mixer (18) for the mixing of the received signal with a local oscillator signal.

8. Arrangement according to Claims 7, **characterized in that** receiver device (E) comprises an amplifier (20) for the amplification of the received, mixed signal.

9. Arrangement according to Claims 8, **characterized in that** receiver device (E) comprises a filter (21) for the filtering of the received signal or for the filtering of the received and mixed signal.

10. Arrangement according to one of the Claims 1 to 9, **characterized in that** the signal generation- and signal analysis device (Z) comprises at least a first oscillator (2) at least for the generation of the first signal or the signal to be sent.

11. Arrangement according to Claim 10, **characterized in that** the first oscillator (2) is also suitable and equipped for the generation of a second signal.

12. Arrangement according to Claim 11, **characterized in that** the second signal and the first signal are identical.

13. Arrangement according to Claim 12, **characterized in that** the signal generation- and signal analysis device (Z) comprises at least a second oscillator (2) for the generation of a second signal.

14. Arrangement according to one of the Claims 11 to 13, **characterized in that** the receiver device (E) comprises a frequency multiplier (19) for the generation of a local oscillation signal from the second signal.

15. Arrangement according to one of the Claims 1 to 14, **characterized in that** the signal generation- and signal analysis device (Z) comprises an analog-to-digital converter (4) for the digitalization of the received, possibly mixed signal.

16. Arrangement according to one of the Claims 1 to 15, **characterized in that** the signal generation- and signal analysis device (Z) comprises a processing means (6) for the processing of the received and possibly mixed and/or digitalized signal.

17. Arrangement according to Claim 16, **characterized in that** the signal generation- and signal analysis device (Z) comprises an interface by means of which information on the detected environment of the motor vehicle is retrievable.

18. Arrangement according to one of the Claims 1 to 17, **characterized in that** the electric lines (12) for the transmission of the first signal, the signal to be sent, the possibly mixed, amplified, filtered and/ or digitalized received signal and/or the second signal from the signal generation- and signal analysis device (Z) to the emission devices (S) are coaxial cables or twisted two-wire lines.

19. Arrangement according to one of the claims 1 to 18, **characterized in that** the signal generation- and signal analysis device (Z) comprises a control means (1) for the control of the emission devices (S).

20. Arrangement according to Claim 19, **characterized in that** the control means (1) is suitable and equipped to control the emission devices (S) sequentially, i.e. one after the other for the emission of the signal to be sent.

21. Arrangement according to one of the Claims 1 to 20, **characterized in that** the signal generation- and signal analysis device (Z) comprises a clock generator (5) clocking the first oscillator (2), the second oscillator (3), the analog-to-digital converter (4), the processing means (6) and/or the control means (1).

22. Method for the detection of the close and/ or remote environment of a motor vehicle with an arrangement according to one of the Claims 1 to 21.

23. Method according to Claim 22, **characterized in that** a two- or three-dimensional image representation of objects or persons in the close and/ or remote environment of the motor vehicle is generated by means of the signal generation- and signal analysis device (Z).

24. Method according to the Claims 22 to 23, **characterized in that** the signal generation- and signal analysis device (Z) controls the frequency multiplier (13) of the emission device (S) so that only one emission device at a time is activated for the sending of a signal.

## Revendications

1. Agencement pour la saisie de l'environnement proche et/ou lointain d'un véhicule automobile
- avec au moins deux dispositifs émetteurs (S) disposés distants l'un de l'autre pour émettre des signaux électromagnétiques, surtout des ondes radar,
- avec au moins un dispositif récepteur (E) pour recevoir des signaux réfléchis sur au moins un premier objet,
- avec un dispositif de génération et d'exploitation de signaux (Z) pour générer des signaux à émettre à une première fréquence et pour exploiter des signaux à recevoir et
- avec au moins une ligne électrique (12) par laquelle les dispositifs émetteurs (S), les dispositifs récepteurs (E) et le dispositif de génération et d'exploitation de signaux (Z) sont reliés entre eux et qui sont appropriés et configurés à échanger des signaux à émettre ou bien à recevoir de façon analogique entre les dispositifs émetteurs (S), les dispositifs récepteurs (E) et le dispositif de génération et d'exploitation de signaux (Z), **caractérisé en ce que**
- les dispositifs émetteurs (S) présentent un multiplicateur de fréquence (13) pour
- générer le signal à émettre d'un premier signal avec lequel la fréquence du premier signal sera multipliée et
- le multiplicateur de fréquence (13) du dispositif émetteur peut être mis en marche et en arrêt pour générer des groupes d'ondes du signal à émettre.

2. Agencement selon la revendication 1, **caractérisé en ce que** les dispositifs émetteurs (S) présentent un filtre (14) surtout un filtre passe-bande (14).

3. Agencement selon la revendication 2, **caractérisé en ce que** le filtre (14) est monté en aval du multiplicateur de fréquence (13).

4. Agencement selon l'une des revendications 1 à 3, **caractérisé en ce que** les dispositifs émetteurs (S) présentent des antennes émettrices (15) pour émettre le signal à émettre.

5. Agencement selon l'une des revendications 1 à 4, **caractérisé en ce que** le dispositif récepteur (E) présente une antenne réceptrice (16) pour recevoir le signal réfléchi.

6. Agencement selon la revendication 5, **caractérisé en ce que** le dispositif récepteur (E) présente un amplificateur (17) pour amplifier le signal reçu.

7. Agencement selon la revendication 5 ou 6, **caractérisé en ce que** le dispositif récepteur (E) présente un mélangeur (18) pour mélanger le signal reçu avec un signal oscillateur local.

8. Agencement selon la revendication 7, **caractérisé en ce que** le dispositif récepteur (E) présente un amplificateur (20) pour amplifier le signal reçu et mélangé.

9. Agencement selon la revendication 8, **caractérisé en ce que** le dispositif récepteur (E) présente un filtre (21) pour filtrer le signal reçu ou pour filtrer le signal reçu et mélangé.

10. Agencement selon l'une des revendications 1 à 9, **caractérisé en ce que** le dispositif de génération et d'exploitation de signaux (Z) présente au moins un premier oscillateur (2) au moins pour générer le premier signal ou le signal à émettre.

11. Agencement selon la revendication 10, **caractérisé en ce que** le premier oscillateur (2) est approprié et configuré à générer également un deuxième signal.

12. Agencement selon la revendication 11, **caractérisé en ce que** le deuxième signal et le premier signal sont identiques.

13. Agencement selon la revendications 12, **caractérisé en ce que** le dispositif de génération et d'exploitation de signaux (Z) présente au moins un deuxième oscillateur (2) pour générer un deuxième signal.

14. Agencement selon l'une des revendications 11 à 13, **caractérisé en ce que** le dispositif récepteur (E) présente un multiplicateur de fréquence (19) pour générer un signal oscillateur local du deuxième signal.

15. Agencement selon l'une des revendications 1 à 14, **caractérisé en ce que** le dispositif de génération et d'exploitation de signaux (Z) présente un convertisseur numérique-analogique (4) pour numériser le signal reçu, éventuellement le signal mélangé.

16. Agencement selon l'une des revendications 1 à 15, **caractérisé en ce que** le dispositif de génération et d'exploitation de signaux (Z) présente un moyen de traitement (6) pour traiter le signal reçu et éventuellement le signal mélangé et/ou numérisé.

17. Agencement selon la revendication 16, **caractérisé en ce que** le dispositif de génération et d'exploitation de signaux (Z) présente une interface sur laquelle des informations sur l'environnement saisi du véhicule automobile sont disponibles.

18. Agencement selon l'une des revendications 1 à 17, **caractérisé en ce que** les lignes électriques (12) pour la transmission du premier signal, du signal à émettre, du signal reçu éventuellement mélangé, amplifié, filtré et/ou numérisé et/ou du deuxième signal du dispositif de génération et d'exploitation de signaux (Z) aux dispositifs émetteurs (S) sont des câbles coaxiaux ou des lignes bifilaires tortillées.

19. Agencement selon l'une des revendications 1 à 18, **caractérisé en ce que** le dispositif de génération et d'exploitation de signaux (Z) présente un moyen de commande (1) pour commander les dispositifs émetteurs (S).

20. Agencement selon la revendication 19, **caractérisé en ce que** le moyen de commande (1) est approprié et configuré à commander les dispositifs émetteurs (S) de manière séquentielle, c'est-à-dire successivement pour émettre le signal à émettre.

21. Agencement selon l'une des revendications 1 à 20, **caractérisé en ce que** le dispositif de génération et d'exploitation de signaux (Z) présente un générateur d'horloge (5) qui est cadencé au premier oscillateur (2), au deuxième oscillateur (3), au convertisseur numérique-analogique (4), au moyen de traitement (6) et/ou au moyen de commande (1).

22. Procédé pour la saisie de l'environnement proche et/ou lointain d'un véhicule automobile avec un agencement selon l'une des revendications 1 à 21.

23. Procédé selon la revendication 22, **caractérisé en ce que** le dispositif de génération et d'exploitation de signaux (Z) génère une représentation imagée à deux ou à trois dimensions des objets ou des personnes dans l'environnement proche et/ou lointain d'un véhicule automobile.

24. Procédé selon l'une des revendications 22 à 23, **caractérisé en ce que** le dispositif de génération et d'exploitation de signaux (Z) commande le multiplicateur de fréquence (13) du dispositif émetteur (S) de telle manière qu'un seul dispositif émetteur pour l'émission d'un signal soit activé à chaque fois.
